# EUROPEAN PATENT APPLICATION

(11) **EP 2 320 141 A1**
(43) Date of publication of application: **11.05.2011**
(21) Application number: 08791669.8
(22) Date of filing: 25.07.2008
(51) Int. Cl.: F23C 10/20, B01D 51/08, F23C 10/24, F23G 5/14, F23G 5/30, F23J 15/06, F27D 17/00

(54) **METHOD FOR INCINERATING WASTE BY TWO-STAGE SWIRLING FLOW FLUIDIZED BED INCINERATOR**

(71) Applicant: JTS International Corporation, Tokyo 102-0073 (JP); Gomi, Yoshio, Mie 513-0817 (JP)
(72) Inventor: GOMI, Yoshio, Suzuka-shi Mie 513-0817 (JP)
(74) Representative: Pfenning, Meinig & Partner GbR
(86) International application number: PCT/JP2008/063425
(87) International publication number: WO 2010/010630

(57) **Abstract**

To provide an apparatus and method which can perform combustion for suppressing the resynthesis of dioxins generated during incineration, neutralization treatment, and the removal of suspended particulate matter efficiently and inexpensively.

A two-stage swirling fluidized bed incinerator system comprising: a two-stage swirling fluidized bed incinerator including a first-stage swirling fluidized bed chamber, a second-stage gas swirl chamber, a gas combustion chamber, a gas cooling chamber, an exhaust gas chamber, and an exhaust tube; and a wet ultrasonic dust collector and a heat exchanger provided in a fluid communication state between the gas cooling chamber and the exhaust gas chamber, and adapted to utilize thermal energy heat-exchanged by the heat exchanger for the incinerator.

## Description

### TECHNICAL FIELD

This invention relates to a two-stage swirling fluidized bed incinerator. More particularly, the invention relates to a two-stage swirling fluidized bed incinerator which can perform high temperature thermal decomposition of wide varieties of wastes burned singly or in mixtures, thereby converting hazardous substances contained in the resulting combustion gases into stable substances for detoxification; can separate and remove suspended particulate matter; and can make use of thermal energy possessed by combustion exhaust gases to convert pressurized air to hot pressurized air.

### BACKGROUND ART

Generally, wastes include so-called kitchen wastes such as plant- or animal-origin food wastes, miscellaneous wastes such as paper, fibers, woods, bamboo, plastics, rubber, hide and leather, and fallen leaves, and others such as earth and sand, glass, ceramics, and metals. Kitchen wastes and miscellaneous wastes are combustible materials containing 60 to 80% of water, while earth and sand, glass, ceramics, and metals are noncombustible materials. The proportions of these combustible materials and noncombustible materials scarcely differ from region to region. In mixed wastes, combustible materials are in a proportion of about 80%, and noncombustible materials are in a proportion of about 20%. Pulp waste liquor, sulfuric acid sludge in petroleum refining, and various other combustible materials contain noncombustible materials, although their amounts differ somewhat. Through the spread of chemical products, incineration ash and combustion fly ash from incineration facilities contain large amounts of dioxins and polychlorinated dibenzofurans which are deadly poisonous aromatic organic chlorine compounds. If these harmful substances flow out into the natural world, direct adverse effects are exerted on natural environment and health, posing a serious social problem.

At present, the incineration of wastes is performed by a fixed bed system, a stoker (fire grate) system, a fluidized bed system, or a gasification melting system. With any of these incineration systems, however, it is impossible to suppress the resynthesis of dioxins and polychlorinated dibenzofurans. The resulting incineration ash and combustion fly ash trapped by a dust collector contain, without doubt, dioxins, polychlorinated dibenzofurans and heavy metals. Under the current situations, incineration ash and combustion fly ash merely undergo endless reprocessing in a melting furnace or the like, and no measures are taken for suppressing the resynthesis of dioxins and polychlorinated dibenzofurans by a special incineration system.

Many of conventional incineration apparatuses have not taken into account the treatment of noncombustible materials such as stone, glass, ceramics and metals incorporated into materials to be incinerated. Even if a noncombustible material removing device or a shredding and grinding device is provided in a pretreatment step of the incineration apparatus, efficient incineration has not been successfully performed. Similar problems remain unsolved in connection with combustible materials other than dust and dirt, for example, even pulp waste liquor and sulfuric acid sludge. Furthermore, deadly poisonous dioxins are resynthesized, or polychlorinated dibenzofurans are generated, from hydrogen chloride (HCl), oxygen (O₂), and carbon monoxide (CO), which occur upon combustion of the materials incinerated, by the catalytic action of heavy metals in combustion fly ash and unburned carbon. These substance have caused serious social problems. Conventional incineration systems have not been successful in solving these problems.

A combustion apparatus, in which a material to be incinerated is charged from above onto an inclined hearth, and air from below is blown upward along an upper oblique baffle plate to form a circulating flow of air, is described, for example, in JP-A-46-892. This apparatus is defective in that a circulation of air is insufficient, and the material to be incinerated is directly charged into the apparatus, so that its complete combustion can be expected minimally.

There is also a one-stage combustion system (e.g., JP-A-49-108856) in which a material to be incinerated is charged into a furnace through an opening at the top of the furnace, the charged material is fluidized and burned with air blown in through an air diffusion pipe provided below the material to be incinerated, whereafter noncombustible materials are discharged to the outside of the apparatus by a screw conveyor provided below the air diffusion pipe. With this system, however, complete combustion in the fluidized bed formed from the material being incinerated is impossible, and combustion of the material with a high water content becomes incomplete combustion.

Besides, a one-stage combustion apparatus, in which a paddle feeder is provided at the bottom of an incinerator, and air is blown in through an air diffusion pipe from below the paddle feeder, is described in JP-A-52-90174. With this combustion apparatus, a material to be incinerated is transported into the furnace from one end of the paddle feeder, and a fluidized layer of the material to be incinerated is formed by air blown in from below the trough of the paddle feeder. However, this method is not always successful in achieving complete combustion because of the one-stage combustion apparatus.

JP-A-55-95016 describes a combustion method on a two-stage combustion system which is different from the above-mentioned apparatus of JP-A-52-90174. According to this combustion method, a material to be incinerated is thrown from obliquely above a fluidized bed chamber in the body of an incinerator, and dropped into a fluidized bed formed by a heating medium (silica sand or the like) to burn a part of the material to be incinerated. The material being incinerated, which has passed through the fluidized bed and fallen to a paddle feeder, is pulverized by the paddle feeder to form a stable fluidized bed owing to blowing-up of air from a feeder trough, and by the action of an air diffusion pipe provided in a middle portion of the fluidized bed chamber. Air heat-exchanged outside the furnace is blown in from a wind box obliquely upwardly, beginning on one of the walls above the air diffusion pipe, and further obliquely downwardly along the opposite wall, thereby forming a swirling fluidized bed. In this case, the material being incinerated is completely burned aboard a whirling flow. However, the material to be incinerated, which has been charged into the furnace, often incorporates a noncombustible material, such as a stone block or a metal lump, of a size larger than the distance between the paddles. Thus, it is often the case that the rotation of the paddle feeder stops, and the pulverization of a combustible material and the transport of the noncombustible material fail to be performed smoothly, thus making sufficient two-stage combustion impossible. Moreover, a basic drawback exists, such that the incineration apparatus itself has to be temporarily stopped. Furthermore, under the action of an acidic gas generated by the combustion of the material being incinerated, for example, hydrogen chloride, most of such apparatuses, except for special ones, suffer from marked deterioration caused to a refractory material on the inner wall of the furnace body. As a result, the functions of the apparatus itself are completely impaired, so that incineration becomes impossible. Burden compensating for these events, and costs for repairs, etc. increase. In addition, the resynthesis of dioxins and polychlorinated dibenzofurans, which are deadly poisonous aromatic organic chlorine compounds, is nearly insuppressible within the incineration apparatus.

Dust collectors, which have been developed thus far, are (1) cyclones, (2) wet dust scrubbers (venturi scrubbers), (3) electrostatic precipitators, (4) bag filters, and (5) sonic precipitators. Of them, the sonic precipitators allow suspended particulates (suspended particulate matter or airborne particles) to collide with each other and flocculate when a gas to be treated is given vibrations by sonic waves. Flocculated particles apparently increase in particle size, and can thus be collected easily by a cyclone or the like. However, the sonic precipitators pose the problem of noise pollution by sonic waves, and they are now scarcely used. The cyclone is adapted for particle diameters of 5 to 10 µm, and has the drawback of being unadaptable for entrained particles measuring about 1 µm which are in question. The collecting performance of the wet dust scrubber is intermediate between the cyclone and the bag filter, and the wet dust scrubber requires waste water treatment on a large scale, because waste water containing a large amount of dust occurs. The electrostatic precipitator moves charged particles in the direction of a positive electrode plate to deposit them on the positive electrode plate, thereby separating them from a gas being treated. To remove the deposited particles, the following methods are available, mechanical peeling from the positive electrode plate by hammering or the like (dry method), and rinsing with a water flow (wet method). The electrostatic precipitator is often used for treating a large amount of a gas, because it can collect the finest particles (of the order of 0.1 µm) of various dust collectors, it can be used even at high temperatures and high pressures, its pressure loss is small (of the order of 10 mm water column), and its operating cost is low. However, the electrostatic precipitator is defective in that since it requires a high voltage (a few thousand volts or more) and a rectifier, its equipment cost is the highest; a large amount of dust is released into the atmosphere when the particles deposited on the positive electrode plate are peeled off mechanically by hammering or the like (4 times or more often per hour); and if the deposited particles are washed away with a water flow, waste water treatment is needed. The bag filter involves a great loss in the pressure of the treated gas, if dust deposits on the filter cloth. Thus, dust needs to be thrown off at constant intervals, so that it is impossible to collect adherent dust or collect dust from a treated gas having a high moisture content. The manner of throwing dust off is inverse airflow blowing or mechanical vibration. However, a filtering operation is stopped while dust is being thrown off, or the bags are divided into several groups, and dust is thrown off one group after another. This method is very irrational, and results in practically no solution to the aforementioned problems.

A heat exchanger for recovering thermal energy from combustion exhaust gases produced by waste incineration facilities is usually desired to be located on as high a temperature side as possible. However, the combustion exhaust gases contain large amounts of moisture and suspended (airborne) particles, thus presenting difficulty in combining the heat exchanger and a dust collector. Further, suspended particles are apt to deposit on the heat exchanger, so that the heat exchanger has to be located on a low temperature side. Thus, the fact is that the effective recovery of thermal energy has not been achieved.

### DISCLOSURE OF THE INVENTION

### PROBLEMS TO BE SOLVED BY THE INVENTION

It is an object of the present invention to provide an incineration apparatus and an incineration method which can solve the above-mentioned problems, suppress the resynthesis of deadly poisonous dioxins and polychlorinated dibenzofurans generated by combustion of a material to be incinerated, collect dust effectively, recover thermal energy effectively, and prevent the cloudiness of combustion exhaust gases released into the atmosphere.

### MEANS FOR SOLVING THE PROBLEMS

According to the present invention, there is provided a two-stage swirling fluidized bed incinerator system, comprising: a first-stage swirling fluidized bed chamber; a second-stage gas swirl chamber in fluid communication with an upper part of the first-stage swirling fluidized bed chamber; a gas combustion chamber in fluid communication with an upper part of the second-stage gas swirl chamber; a wet wall type gas cooling chamber provided in an upper part of the gas combustion chamber; a wet ultrasonic dust collector in fluid communication with a side surface of an upper part of the wet wall type gas cooling chamber; a swirling air heat exchanger and a fluidizing air heat exchanger in fluid communication with the wet ultrasonic dust collector; and an exhaust gas chamber having an exhaust tube for discharging a combustion exhaust gas to an outside of the system, the combustion exhaust gas having been dedusted in the wet ultrasonic dust collector and heat-exchanged in the swirling air heat exchanger and the fluidizing air heat exchanger, and adapted to utilize thermal energy, which is obtained by heat exchange in the swirling air heat exchanger and the fluidizing air heat exchanger, for generation of swirl flows in the first-stage swirling fluidized bed chamber, the second-stage gas swirl chamber, and the exhaust tube. The first-stage swirling fluidized bed chamber is provided with a conical bottom plate furnished with many orifice nozzles and a heating medium withdrawal port, a wind box provided below the conical bottom plate, and a hot air feed pipe for feeding pressurized air into the wind box, and the heating medium is filled beforehand above the conical bottom plate so that pressurized air blown in from the hot air feed pipe is blown out upwardly of the conical bottom plate through the many orifice nozzles to blow the heating medium upward, thereby forming a fluidized bed, an inner wall of an upper part of the first-stage swirling fluidized bed chamber is provided with many orifice nozzles arranged tangentially, an outer wall of the upper part of the first-stage swirling fluidized bed chamber is provided with an annular wind box in fluid communication with the many orifice nozzles arranged tangentially, and the wind box is mounted with a hot air feed pipe for feeding pressurized air so that pressurized air fed into the wind box is fed into the first-stage swirling fluidized bed chamber through the many orifice nozzles arranged tangentially, whereby the heating medium forming the fluidized bed is swirled. A charging port for a material to be incinerated, a neutralizer charging port, a heating medium circulation port, and a burner are provided between the first-stage swirling fluidized bed chamber and the second-stage gas swirl chamber so that the material to be incinerated, the neutralizer, and the heating medium are charged into the fluidized bed, and allowed to ascend to the second-stage gas swirl chamber while being swirled, an inner wall of an upper part of the second-stage gas swirl chamber is provided with many orifice nozzles, an outer wall of the upper part of the second-stage gas swirl chamber is provided with an annular wind box in fluid communication with the orifice nozzles, and the wind box is mounted with a hot air feed pipe for feeding pressurized air so that pressurized air fed into the wind box is blown into the second-stage gas swirl chamber through the orifice nozzles, whereby a combustion exhaust gas ascending from the first-stage swirling fluidized bed chamber is further swirled. An upper part of the gas combustion chamber is provided with an exhaust gas outlet pipe in fluid communication with the wet wall type gas cooling chamber so that a combustion gas and a combustion fly ash are introduced into the wet wall type gas cooling chamber. The wet wall type gas cooling chamber is provided with a headpiece so as to cover the exhaust gas outlet pipe of the gas combustion chamber, a cooling water inlet pipe is provided in a central part of an upper surface of the headpiece, and a high pressure air inlet pipe for feeding high pressure air is provided below the headpiece and in an outer peripheral part of the exhaust gas outlet pipe in such a manner as to penetrate an outer wall of the wet wall type gas cooling chamber so that cooling water is continuously and averagely fed along the upper surface of the headpiece, and is brought into contact with the combustion exhaust gas and fly ash, which are ascending from the gas combustion chamber, at a lower end of the headpiece, and that cooling water containing the combustion exhaust gas and fly ash is stored in a space between the outer peripheral part of the exhaust gas outlet pipe and the outer wall of the wet wall type gas cooling chamber. The exhaust gas chamber is provided with a combustion exhaust gas inlet pipe for introducing the combustion exhaust gas after collection of the fly ash, a white smoke preventing hot air inlet pipe, and the exhaust tube, an annular wind box is provided at a lowermost stage of the exhaust tube, many orifice nozzles arranged tangentially are provided in a side plate of the exhaust tube, and a hot air feed pipe for feeding pressurized air is provided outside the exhaust tube so that pressurized air is passed through the hot air feed pipe, and blown into the exhaust tube from the orifice nozzles via the wind box to generate the swirl flow.

The wet ultrasonic dust collector preferably comprises an exhaust gas inlet pipe of a square cross-sectional shape and in a conical form, a gas straightening plate unit, a vibrator unit composed of many piezoelectric elements, a mist separator, and an exhaust gas outlet pipe of a square cross-sectional shape and in a conical form.

The swirling air heat exchanger preferably comprises an exhaust gas inlet pipe of a square cross-sectional shape and in a conical form, an air diffusion pipe for removing deposited soot and dust by high pressure air, an expansion of a square cross-sectional shape, and piping for feeding hot air to the first-stage swirling fluidized bed chamber, the second-stage gas swirl chamber, and the exhaust gas chamber of the two-stage swirling fluidized bed incinerator.

Preferably, the fluidizing air heat exchanger is provided downstream of the swirling air heat exchanger, and comprises a duct in fluid communication with the swirling air heat exchanger, an air diffusion pipe for removing deposited soot and dust by high pressure air, an expansion of a square cross-sectional shape, piping for feeding hot air to generate the fluidized bed at a bottom of the two-stage swirling fluidized bed incinerator, piping for feeding an exhaust gas to the exhaust gas chamber of the two-stage swirling fluidized bed incinerator, a soot and dust storage chamber, and a soot and dust outlet pipe.

According to the present invention, there is also provided an incineration method for incinerating a material to be incinerated, with the use of the two-stage swirling fluidized bed incinerator system described above. This method comprises: charging the material to be incinerated, into a heating medium, which is swirlingly ascending from the first-stage swirling fluidized bed chamber, through the charging port for the material to be incinerated, keeping an outside temperature of a swirl flow within the gas combustion chamber at 850°C or higher, and maintaining a central axis temperature of the swirl flow at 1,300°C or higher, thereby completely burning the material to be incinerated; charging a neutralizer through the neutralizer charging port to neutralize an acidic gas which is a combustion product of the material to be incinerated; introducing a combustion gas and a fly ash, which are generated by combustion of the material to be incinerated, into the wet wall type gas cooling chamber through the exhaust gas outlet pipe of the gas combustion chamber; feeding cooling water continuously and averagely through the cooling water inlet pipe along the upper surface of the headpiece to bring the combustion exhaust gas, fly ash and cooling water into contact with each other and store cooling waste water containing the combustion exhaust gas and fly ash in the space between the outer peripheral part of the exhaust gas outlet pipe and the outer wall of the wet wall type gas cooling chamber, feeding high pressure air through the high pressure air inlet pipe to mix the combustion exhaust gas and the fly ash, then discharging the waste water, and discharging a remaining combustion gas; dedusting and heat-exchanging the combustion gas discharged from the wet wall type gas cooling chamber, then returning the combustion gas to the exhaust gas chamber, and allowing the combustion gas to ascend to the exhaust tube to generate the swirl flow, thereby vaporizing moisture in the combustion gas; and utilizing thermal energy recovered by heat exchange of the combustion gas for generating the swirl flows in the first-stage swirling fluidized bed chamber, the second-stage gas swirl chamber, and the exhaust tube, and for forming the fluidized bed below the first-stage swirling fluidized bed chamber, thereby neutralizing a combustion acidic gas and suppressing resynthesis of dioxins.

Preferably, the above-described incineration method further comprises: uniformizing a flow containing the combustion exhaust gas and the combustion fly ash, which has been discharged through the exhaust gas outlet pipe provided in an upper side surface of the wet wall type gas cooling chamber, by the gas straightening plate unit of the wet ultrasonic dust collector; absorbing the combustion fly ash into fine water droplets formed by giving vibrations in a sound wave region at about 28 KHz/S which have been generated by the vibrator unit composed of the many piezoelectric elements, thereby separating the combustion fly ash from the combustion exhaust gas; removing remaining water droplets in the combustion exhaust gas by the mist separator; and then sending the dedusted combustion exhaust gas to the swirling air heat exchanger and the fluidizing air heat exchanger for heat exchange, followed by introducing the heat-exchanged exhaust gas into the exhaust gas chamber.

Generally, the process of formation of dioxins in an incineration system is considered to be such that unburned components or precursors remaining without being completely burned in a secondary combustion chamber react with hydrogen chloride produced by combustion to form the dioxins, when all of necessary conditions, such as temperature, atmosphere, and catalyst, during their passage through a dust collector and a heat exchanger after the secondary combustion chamber are fulfilled suitably. This formation reaction proceeds in a reaction path 1) in which a heavy metal (especially, copper) in soot and dust serves as a catalyst in an ambient temperature of 300 to 500°C to synthesize dioxins from unburned carbon, etc., or a reaction path 2) in which a precursor, such as chlorophenol or chlorobenzene, decomposes, followed by synthesizing dioxins. The synthesis reaction in 1), in particular, is called de novo synthesis in a sense that the dioxins are synthesized newly from minimally related substances. Strongly toxic dioxins, as will be understood from their chemical structure, are considered to be essentially a kind of unburned matter, like carbon monoxide (CO) or various hydrocarbons (HC's). Hence, a high combustion temperature (temperature), a sufficient dwell time of a combustion gas (time), and satisfactory turbulent mixing of the unburned gas and air (turbulence) are the most important factors for the method of suppressing formation of dioxins in the incinerator. Thus, a good balance among these three factors enables the resynthesis of most dioxins to be suppressed, provided that the concentration of oxygen (O₂) is controlled. Hydrogen chloride produced by combustion is simultaneously neutralized with lime (CaO) under burning conditions, with these three factors being well balanced, whereby stable and harmless calcium chloride (CaCl₂) and water (H₂O) are formed. Even if a heavy metal catalyst exists in a combustion exhaust gas, calcium chloride (CaCl₂) and water (H₂O) scarcely react, so that the automatic supply of a neutralizer appropriate to the combustion exhaust gas can boost the effect of suppressing the resynthesis of dioxins.

Fly ash and heavy metals in the combustion exhaust gas are absorbed into cooling water in the headpiece-equipped wet wall type gas cooling chamber provided in the upper part of the two-stage swirling fluidized bed incinerator. Cooling water having absorbed the fly ash and heavy metals is separated into treated water and sludge by the coagulation-sedimentation waste water treatment apparatus, together with waste water from the wet ultrasonic dust collector. The treated water is recirculated to the wet wall type gas cooling chamber, and recycled as cooling water. In this manner, the moisture content of the combustion exhaust gas in the wet ultrasonic dust collector can be kept to a minimum, and deposition of fly ash, etc. on the air heat exchangers can be prevented. Accordingly, the air heat exchangers can be located on the high temperature side of the combustion exhaust gas.

With the combustion apparatus of the present invention, moreover, dust collection is performed using water, so that the problem of noise pollution by sound waves of the sonic precipitator can be solved.

Furthermore, with the combustion apparatus of the present invention, a swirl flow is generated in a white smoke of the combustion exhaust gas released into the atmosphere and the white smoke is mixed it with hot air, whereby cloudiness can be prevented.

### BRIEF DESCRIPTION OF THE DRAWINGS

Fig. 1(a) is a vertical sectional view conceptually showing a two-stage swirling fluidized bed incinerator according to the present invention. Figs. 1(b) to 1(d) are vertical sectional views showing respective parts of the incinerator.
Fig. 2 is a sectional plan view taken on line A-A in Fig. 1(B).
Fig. 3 is a sectional plan view taken on line B-B in Fig. 1(C).
Fig. 4 is a sectional plan view taken on line C-C in Fig. 1(D).
Fig. 5 is a system diagram showing the outline of a two-stage whirling flow combustion furnace system according to the present invention.

### EXPLANATION OF THE REFERENCE NUMERALS

- 1: Furnace body
- 1-1: First-stage swirl flow chamber
- 1-2: Second-stage gas swirl chamber
- 1-3: Gas combustion chamber
- 2: Heating medium withdrawal port
- 3: Orifice nozzle
- 4: Wind box
- 5: Hot air feed pipe
- 6: Orifice nozzle
- 7: Wind box
- 8: Annular header pipe
- 9, 10, 11: Hot air feed pipe
- 12: Damper
- 13: Inlet for solid material to be incinerated
- 14: Inlet for liquid material to be incinerated
- 15: Heating medium circulation port
- 16: Neutralizer charging port
- 17: Burner
- 18: Orifice nozzle
- 19: Wind box
- 20: Annular header pipe
- 21, 22, 23: Hot air feed pipe
- 24: Damper
- 25: Exhaust gas outlet pipe
- 26: Combustion gas emergency release port
- 27: Gas cooling chamber (wet wall type)
- 28: Exhaust gas outlet pipe
- 29: Exhaust gas chamber
- 30: Exhaust gas inlet pipe
- 31: White smoke preventing hot air inlet pipe
- 32: Exhaust tube
- 33: Wind box
- 34: Orifice nozzle
- 35: Annular header pipe
- 36, 37: Hot air feed pipe
- 38: Damper
- 39: Hot air feed pipe
- 40: Cooling water inlet pipe
- 41: Pressurized air inlet pipe
- 42: Headpiece
- 43: Accommodation box for material to be treated
- 44: Electric traversing hoist
- 45: Electric jaw block
- 46: Compressive shearing machine
- 47: No. 1 treatment material carrier
- 48: Treatment material storage tank
- 49: Automatic withdrawer
- 50: No. 2 treatment material carrier
- 51: Dust supply device
- 52: Storage tank for liquid material to be incinerated
- 53: Residual oil storage tank
- 54, 55: Pump unit
- 56: Mixing tank
- 57: Pump unit
- 58: Mixture liquid spraying device
- 59: Classifier
- 60: Heating medium circulating device
- 61: Rotary feeder
- 62: Heating medium storage tank
- 63: Noncombustible material carrier
- 64: Noncombustible material storage box
- 65: Neutralizer storage tank
- 66: Dehumidifier
- 67: Volumetric feeder
- 68: Hot air feed pipe
- 69: Auxiliary fuel storage tank
- 70: Oil pump unit
- 71: Combustion blower
- 72: Wet ultrasonic dust collector
- 72a: Exhaust gas inlet pipe
- 72b: Gas straightening plate unit
- 72c: Vibrator unit
- 72d: Mist separator
- 72e: Exhaust gas outlet pipe
- 73: Swirling air heat exchanger
- 73a: Exhaust gas inlet pipe
- 73b: Expansion
- 74: Swirling blower
- 75: Fluidizing air heat exchanger
- 75a: Duct
- 75b: Expansion
- 76: Fluidizing blower
- 77: Induced draft fan
- 78: Air diffusion pipe
- 79: Soot and dust bunker
- 80: Double damper
- 81: Fly ash carrier
- 82: Humidifier
- 83: Ash bunker
- 84: Air compressor
- 85: Hot air generator
- 85a: Oil burner
- a: Heating medium
- b: Solid material to be incinerated
- c: Liquid material to be incinerated
- d: Noncombustible material
- e: Hot air
- f: Refractory material
- g: Neutralizer
- h: Combustion gas
- i: Combustion fly ash
- j: Exhaust gas
- k: Hot air
- 1: Cooling water (treated water)
- m: Auxiliary fuel
- n: Conical bottom plate
- o: High pressure air
- p: Residual oil
- q: Waste water
- r: Mixed liquid
- s: New water
- t: Air
- u: Pressurized air

### EMBODIMENT OF THE INVENTION

Embodiments of the present invention will now be described in detail based on the accompanying drawings.

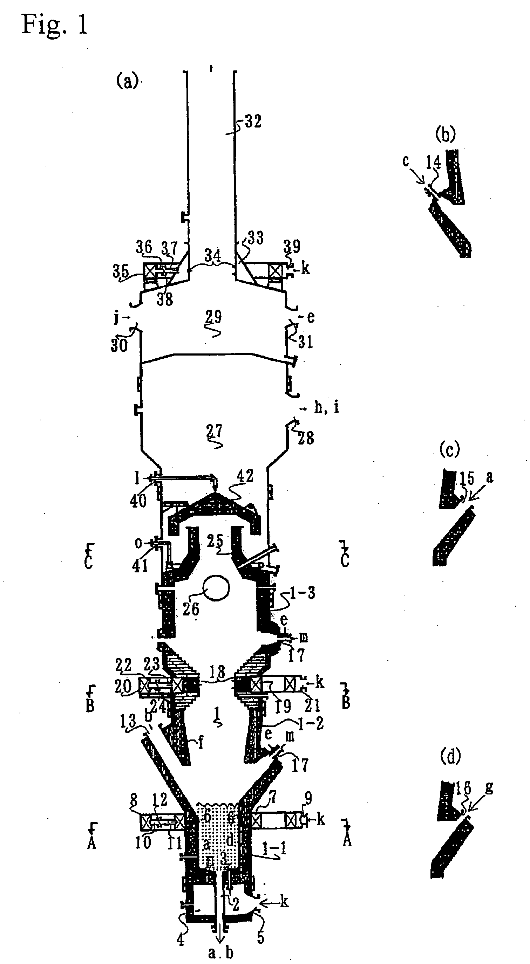

Fig. 1 is a sectional view conceptually showing an incinerator which is a main apparatus according to the present invention. A two-stage swirling fluidized bed incinerator 1 comprises a first-stage swirling fluidized bed chamber 1-1, a second-stage gas swirl chamber 1-2 in fluid communication with an upper part of the first-stage swirling fluidized bed chamber 1-1, a gas combustion chamber 1-3 in fluid communication with an upper part of the second-stage gas swirl chamber 1-2, and a wet wall type gas cooling chamber 27 provided above the gas combustion chamber 1-3.

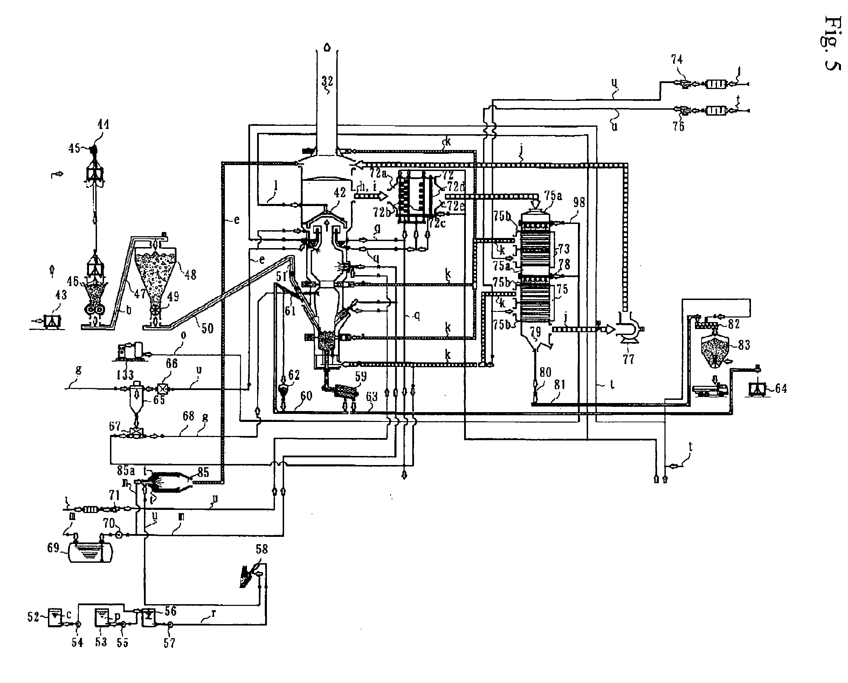

The first-stage swirling fluidized bed chamber 1-1 is provided with a conical bottom plate n furnished with many orifice nozzles 3 and a heating medium withdrawal port 2, a wind box 4 provided below the conical bottom plate n, and a hot air feed pipe 5 for blowing hot air k into the wind box 4. The conical bottom plate n is gently inclined like a mortar. The heating medium withdrawal port 2 is provided to pass through the center of the conical bottom plate n and extend to a lowermost part of the incinerator. Nearly throughout the entire surface of the conical bottom plate n, the many orifice nozzles 3 are arranged vertically. These orifice nozzles 3 communicate with the wind box 4 provided below the conical bottom plate n. A heating medium a is filled above the conical bottom plate n. Hot air k fed from the hot air feed pipe 5 is blown out upwardly of the conical bottom plate n through the many orifice nozzles 3 to blow the heating medium a upward and form a fluidized bed. The hot air k is fed by a silencer-equipped blower 76 shown in Fig. 5, heat-exchanged by an air heat exchanger 75, then passed through the orifice nozzles 3, and blown into the first-stage swirling fluidized bed chamber 1-1 to blow up the heating medium a charged beforehand, thereby constituting a fluidized bed furnace.

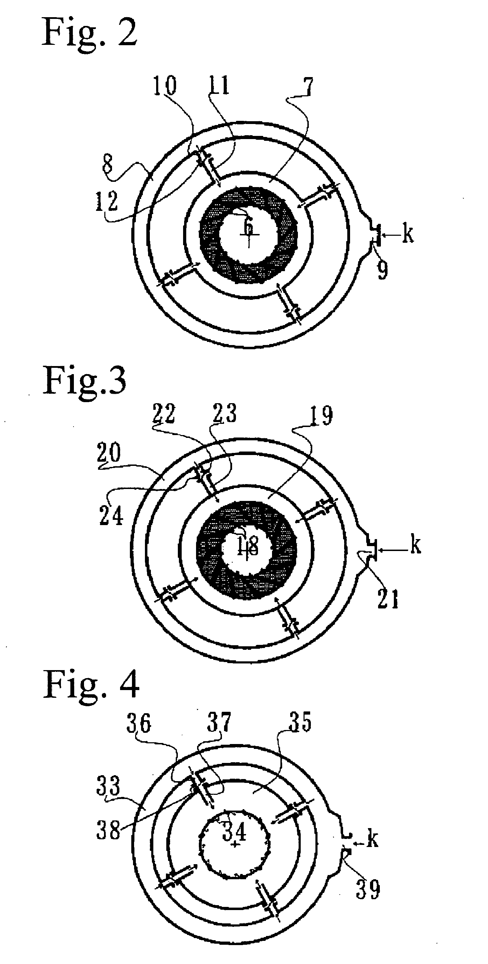

In the inner wall of the upper part of the first-stage swirling fluidized bed chamber 1-1, many orifice nozzles 6 are provided which are arranged tangentially at an arbitrary angle, as shown in Fig. 2. On the outer wall of the upper part of the first-stage swirling fluidized bed chamber 1-1, an annular wind box 7 in fluid communication with the many orifice nozzles 6 arranged tangentially is provided between the outside plate of a furnace body 1 and a refractory material f. As shown in detail in Fig. 2, the wind box 7 is mounted with a hot air feed pipe 9, which feeds hot air k, in a part of an annular header pipe 8 disposed outside the furnace body 1. A hot air feed pipe 10, a damper 12, and a hot air feed pipe 11 are provided between the annular header pipe 8 and the wind box 7. The hot air k fed from the hot air feed pipe 9 is supplied into the wind box 7 via the annular header pipe 8, the hot air feed pipe 10, the damper 12, and the hot air feed pipe 11. The hot air k fed into the wind box 7 is blown into the first-stage swirling fluidized bed chamber 1-1 through the many orifice nozzles 6 arranged tangentially to swirl the heating medium a forming the fluidized bed, thereby forming a stable first-stage swirling fluidized bed.

A burner 17 is provided between the first-stage swirling fluidized bed chamber 1-1 and the second-stage gas swirl chamber 1-2. At other locations on the same circumference as the position of mounting of the burner 17, an inlet 13 for a solid material to be incinerated, an inlet 14 for a liquid material to be incinerated, a heating medium circulation port 15, and a neutralizer charging port 16 inclined obliquely downwardly are provided, as shown in Figs. 1(a), 1(b), 1(c) and 1(d). Thus, a solid material b to be incinerated, a liquid material c to be incinerated, the heating medium a, and a neutralizer g are charged into the fluidized bed, and allowed to ascend to the second-stage gas swirl chamber 1-2 while being swirled.

In the inner wall of the upper part of the second-stage gas swirl chamber 1-2, orifice nozzles 18 are provided. On the outer wall of the upper part of the second-stage gas swirl chamber 1-2, an annular wind box 19 is provided in fluid communication with the orifice nozzles 18. As shown in Fig. 3, the wind box 19 is mounted with a hot air feed pipe 21, which feeds hot air k, in a part of an annular header pipe 20. A hot air feed pipe 22, a damper 24, and a hot air feed pipe 23 are provided between the annular header pipe 20 and the wind box 19. The hot air k fed from the hot air feed pipe 21 is supplied into the wind box 19 via the annular header pipe 20, the hot air feed pipe 22, the damper 24, and the hot air feed pipe 23. The hot air k fed into the wind box 19 is blown into the second-stage gas swirl chamber 1-2 through the orifice nozzles 18 to further swirl the swirling fluidized bed ascending from the first-stage swirling fluidized bed chamber 1-1, thereby forming an even tougher second-stage swirling fluidized bed.

In the upper part of the gas combustion chamber 1-3, an exhaust gas outlet pipe 25 is provided in fluid communication with a wet wall type gas cooling chamber 27 so that a combustion gas h and a combustion fly ash i are introduced into the wet wall type gas cooling chamber 27.

In the wet wall type gas cooling chamber 27, a headpiece 42 is provided so as to cover the exhaust gas outlet pipe 25 of the gas combustion chamber 1-3. A cooling water inlet pipe 40 is provided at a central part of the upper surface of the headpiece 42. A high pressure inlet pipe 41 for feeding high pressure air to a site below the headpiece 42 and at an outer peripheral part of the exhaust gas outlet pipe 25 is provided to penetrate the outer wall of the wet wall type gas cooling chamber 27. Cooling water 1 is continuously and averagely fed along the upper surface of the headpiece 42, and is brought into contact with the combustion gas h and the combustion fly ash i, which are ascending from the gas combustion chamber 1-3, at the lower end of the headpiece 42, thereby cooling the combustion gas h and the combustion fly ash i. The cooling water 1 containing the combustion gas h and the combustion fly ash i is stored in a space between an outer peripheral part of the exhaust gas outlet pipe 25 and the outer wall of the wet wall type cooling chamber 27.

The exhaust gas outlet pipe 28 of the wet wall type gas cooling chamber 27 is connected to a wet ultrasonic dust collector 72. The wet ultrasonic dust collector 72 comprises an exhaust gas inlet pipe 72a of a square cross-sectional shape and in a conical form, a gas straightening plate unit 72b, a vibrator unit 72c composed of many piezoelectric elements, a mist separator 72d, and an exhaust gas outlet pipe 72e of a square cross-sectional shape and in a conical form.

The wet ultrasonic dust collector 72 is connected to a swirling air heat exchanger 73 and a fluidized bed air heat exchanger 75 via piping.

The swirling air heat exchanger 73 comprises an exhaust gas inlet pipe 73a of a square cross-sectional shape and in a conical form, an air diffusion pipe 78 for removing deposited soot and dust by high pressure air, an expansion 73b of a square cross-sectional shape, and piping for feeding hot air k to the first-stage swirling fluidized bed chamber 1-1, the second-stage gas swirl chamber 1-2, and an exhaust gas chamber 29 of the two-stage swirling fluidized bed incinerator.

The fluidizing air heat exchanger 75 is provided downstream of the swirling air heat exchanger 73, and comprises a duct 75a in fluid communication with the swirling air heat exchanger 73, an air diffusion pipe 78 for removing deposited soot and dust by high pressure air, an expansion 75b of a square cross-sectional shape, piping for feeding hot air k for generating the fluidized bed at the bottom of the two-stage swirling fluidized bed incinerator, piping for feeding an exhaust gas j to the exhaust gas chamber 29 of the two-stage swirling fluidized bed incinerator, a soot and dust storage chamber 79, and a soot and dust outlet pipe 80. The combustion fly ash i transported from the wet wall type gas cooling chamber 27 via the exhaust gas outlet pipe 28 is collected into a soot and dust bunker 79 in a lower part of the fluidized bed air heat exchanger 75 by a gas flow from the air diffusion pipe 78.

The swirling air heat exchanger 73 also has pipings connected thereto for feeding hot air k (200°C) to the hot air feed pipe 9 of the first-stage swirling fluidized bed chamber 1-1, the hot air feed pipe 21 of the second-stage gas swirl chamber 1-2, and the exhaust gas inlet pipe 30 in the lower part of the exhaust gas chamber 29. Further, the fluidized bed air heat exchanger 75 has piping connected thereto for feeding hot air k (200°C) to the wind box 4 located below the first-stage swirling fluidized bed chamber 1-1.

The exhaust gas chamber 29 is further provided above the wet wall type cooling chamber 27. The exhaust gas chamber 29 is provided with the exhaust gas inlet pipe 30 for recirculation of an exhaust gas j remaining after trapping of the combustion fly ash i, a white smoke preventing hot air inlet 31, and an exhaust tube 32. An annular wind box 33 is provided at the lowermost stage of the exhaust tube 32. The wind box 33 is mounted with a hot air feed pipe 39, which feeds hot air k, at a part of an annular header pipe 35 disposed outside the exhaust tube 32, as shown in Fig. 4. A hot air feed pipe 35, a damper 38, and a hot air feed pipe 36 are provided between the annular header pipe 35 and the wind box 33. The hot air k fed from the hot air feed pipe 39 is supplied into the wind box 33 via the annular header pipe 33, the hot air feed pipe 36, the damper 38, and the hot air feed pipe 37. The hot air k supplied into the wind box 33 is blown into the exhaust tube 32 through many orifice nozzles 34 arranged tangentially, and is well mixed with the exhaust gas j generating a swirl flow to vaporize steam in the exhaust gas j, thereby preventing the occurrence of a white smoke. The white smoke preventing hot air inlet pipe 31 is provided at an arbitrary position on the same level as the exhaust gas inlet pipe 30 of the chamber 29. The white smoke preventing hot air inlet pipe 31 is connected to a hot air generator 85 provided separately. The hot air generator 85 is equipped with an oil burner 85a, and burns a mixture of an auxiliary fuel m and pressurized air u to generate a combustion gas, and generates hot air e, adjusted to a gas temperature of 600°C, by mixing the combustion gas and air t taken in from the side surface of the hot air generator 85.

Next, an explanation will be offered for a method of burning a material to be incinerated, with the use of a two-stage swirling fluidized bed combustion furnace system according to the present invention.

The solid material b to be incinerated is stored in a constant volume in an accommodation box 43 for a material to be treated (hereinafter referred to as a treatment material), which is shown in Fig. 5. The solid material b to be incinerated is moved to a charging port of a compressive shearing machine 46, and charged into the machine, with the use of an electric traversing hoist 44 and an electric jaw block 45. The solid material b to be incinerated, which has been charged into the compressive shearing machine 46, is cut to 50 mm square, transported to a treatment material storage tank 48 by a No. 1 treatment material carrier 47 shown in Fig. 5, and temporarily stored there. Then, the solid material b to be incinerated is withdrawn by an automatic withdrawer 49, and transported, in a constant amount at a time, by a No. 2 treatment material carrier 50. Then, the solid material b to be incinerated is passed through a dust supply device 51, and charged, in a constant amount at a time, into the first-stage swirling fluidized bed chamber 1-1 from the inlet 13 for the solid material to be incinerated.

The liquid material c to be incinerated is temporarily stored in a storage tank 52 for the liquid material to be incinerated. A residual oil p used to adjust the amount of heat of the liquid material C to be incinerated is temporarily stored in a residual oil storage tank 53. The liquid material c to be incinerated and the residual oil p are sent to a mixing tank 56 by pump units 54 and 55, respectively, for the purpose of adjusting the amount of heat. Then, a mixed liquid r, as a mixture of the liquid material C to be incinerated and the residual oil p, is sent by a pump unit 57 to an inlet 14 for the liquid material to be incinerated, and sprayed into the first-stage swirling fluidized bed chamber 1-1 by a mixture spraying device 58.

The material to be incinerated, which has thus been fed into the first-stage swirling fluidized bed chamber 1-1, is dried and gasified instantaneously, and partly burned, whereby a first-stage combustion step is completed. At the same time, a noncombustible material d is separated from a combustible material within the first-stage swirling fluidized bed chamber 1-1, and temporarily stagnated on the conical bottom plate n. Then, the noncombustible material d is transported to the outside of the furnace through the heating medium withdrawal port 2 together with a part of the heating medium a, and sent to a classifier 59 shown in Fig. 5, whereafter the mixture is separated into the heating medium a and the noncombustible material d in the classifier 59. The separated heating medium a is transported to a rotary feeder 61 by a heating medium circulating device 60 shown in Fig. 5. The heating medium a which has overflowed is temporarily stored in a heating medium storage tank 62, and then sequentially returned to the heating medium circulating device 60. Then, the heating medium a is returned, in a constant amount at a time, into the fluidized bed of the first-stage swirling fluidized bed chamber 1-1 through the heating medium circulation port 15 (see Fig. 1(c)) provided in the inner wall between the first-stage swirling fluidized bed chamber 1-1 and the second-stage gas swirl flow chamber 1-2, for the purpose of recycling. On the other hand, the noncombustible material d is sent to a noncombustible material storage box 64 by a noncombustible material carrier 63 shown in Fig. 5, temporarily stored there, and then transported to the outside of the system. In the present invention, the heating medium a also provides a seal (sand seal) of the incinerator against outside air, the incinerator being required to have outside air-tightness out of the necessity of being operated with a rated operation and always in a negative pressure state.

A neutralizer g (CaO or the like) is charged into the swirling fluidized bed within the first-stage swirling fluidized bed chamber 1-1, whereby an acidic gas, e.g., hydrogen chloride, generated by the combustion of the solid material b to be incinerated and the liquid material c to be incinerated, is neutralized by a chemical reaction. The neutralizer g is stored in a neutralizer storage tank 65, and mixed with pressurized air u, which has passed through a dehumidifier 66. Then, the neutralizer g mixed with pressurized air u is fed by a volumetric feeder 67, in a constant amount at a time, and charged through the neutralizer charging port 16 via a hot air feed pipe 68. In the present invention, the neutralizer g is entrained a whirlwind flow (turbulence) of the swirling fluidized bed, and has a long time of direct mixing with the combustion gas, thus performing an efficient neutralization reaction and exhibiting the effect of suppressing dioxins.

The burner 17 burns the auxiliary fuel m having a high calorific value, such as heavy oil. The auxiliary fuel m is stored in an auxiliary fuel storage tank 69, and fed by an oil pump unit 70. The auxiliary fuel m is mixed with high pressure air o fed from a combustion blower 71, and burns. The heating medium a ignites in a swirling fluid state, and burns to raise the temperature inside the furnace to a set temperature. At this time, the solid material b to be incinerated and the liquid material c to be incinerated are supplied, individually or simultaneously, into the first-stage swirling fluidized bed chamber 1-1. Using the burner 17, the outer temperature of the whirlwind flow can be held at 850°C or higher to stabilize the combustion of the solid material b to be incinerated and the liquid material c to be incinerated, and the energy of the whirlwind flow, namely, the central axis temperature of the whirlwind flow can be maintained at 1, 300°C or higher.

The annular header pipe 20 is fed with hot air k (200°C) which has been supplied from a silencer-equipped swirling blower 74 shown in Fig. 5, and heat-exchanged by the swirling air heat exchanger 73. The hot air k is adjusted to an average oxygen concentration (air amount) by the damper 24, fed to the wind box 19, and blown out into the second-stage gas swirl flow chamber 1-2 through each orifice nozzle 18, thereby forming an even tougher second-stage swirl flow than the swirl flow (whirlwind flow) produced in the first-stage swirling fluidized bed chamber 1-1.

The second-stage swirl flow (whirlwind flow) has the property of attracting substances present outside the swirl flow to the center of the swirl flow. Because of this property, a combustion gas (acidic gas) generated in the incinerator 1 is attracted to the central part of the swirl flow, so that the corrosion, by the acidic gas, of the refractory material f used in the inner wall surface of the incinerator 1 can be completely inhibited, and the dwell time of the combustion gas within the furnace can be prolonged. Furthermore, the temperature of the central part of the swirl flow can be held at 1, 300°C or higher. In this manner, the second-stage swirl flow can virtually accomplish the neutralization of the acidic gas and the complete combustion of the solid material b to be incinerated and the liquid material c to be incinerated. Consequently, the generation of dioxins is markedly suppressed.

The solid material b to be incinerated and the liquid material c to be incinerated ascend to the gas combustion chamber 1-3 while swirling under the action of the swirl flow produced in the second-stage gas swirl flow chamber 1-2, and burn there. The combustion gas h and combustion fly ash i after completion of burning are discharged through the exhaust gas outlet pipe 25 provided at the top of the gas combustion chamber 1-3 of the furnace body 1, and are guided to the gas cooling chamber (wet wall type) 27. At this time, the cooling water 1 is fed continuously and averagely from the cooling water inlet pipe 40 provided in the central part of the headpiece 42, and brought into opposed contact with the combustion gas h and combustion fly ash i moving upward. The ascending combustion gas h and combustion fly ash i are contacted with the cooling water 1, and thereby cooled to 500 to 400°C. As a result, waste water containing the combustion fly ash i is stored in the space between the outer peripheral part of the exhaust gas outlet pipe 25 of the gas combustion chamber 1-3 and the outer wall of the wet wall type cooling chamber 27. High pressure air o is fed from the pressure air inlet pipe 41 to this waste water, and thoroughly mixed with this waste water, whereby 50% or more of the combustion fly ash i can be suspended in the waste water averagely. The combustion gas h containing the remaining combustion fly ash i is lowered in temperature to 500 to 400°C by the cooling water 1, and then discharged from the exhaust gas outlet pipe 28 provided in the side surface of the upper part of the gas cooling (wet wall type) 27. Preferably, a combustion gas emergency release port 26 is provided at the top of the gas combustion chamber 1-3 to prevent an explosion accident due to the unburned gas.

The combustion exhaust gas j containing the combustion fly ash i, which has been discharged from the exhaust gas outlet pipe 28, is sent to the wet ultrasonic dust collector 72 shown in Fig. 5. The wet ultrasonic dust collector 72 collects fly ash containing heavy metals, and separates it from the exhaust gas j. Preferably, the combustion exhaust gas is uniformized by the gas straightening plate unit 72b, and then the combustion fly ash is absorbed into fine water droplets formed when given vibrations in a sound wave region of about 28 KHz/S generated in the vibrator unit 72c composed of many piezoelectric elements, whereby the fly ash is separated from the combustion exhaust gas. The remaining water droplets in the combustion exhaust gas are removed by the mist separator 72d. The exhaust gas j after the fly ash has been separated and removed in this manner is sent to the swirling air heat exchanger 73 and the fluidizing air heat exchanger 75. In the swirling air heat exchanger 73, the exhaust gas j exchanges heat with air fed from the silencer-equipped swirling blower 74 to warm the air, forming swirling hot air k (200°C). In the fluidizing air heat exchanger 75, the exhaust gas j exchanges heat with air fed from the silencer-equipped fluidizing blower 76 to warm the air, forming fluidizing hot air k (200°C). The fluidizing hot air k passes through the piping, and is introduced from the bottom of the first-stage swirling fluidized bed chamber 1-1 via the hot air feed pipe 5 and the wind box 4. The swirling hot air k passes through the piping, is introduced into the first-stage swirling fluidized bed chamber 1-1 via the hot air feed pipe 9 and the wind box 7, is introduced into the second-stage gas swirl chamber 1-2 via the hot air feed pipe 21 and the wind box 19, and is introduced into the exhaust tube 32 via the hot air feed pipe 36 and the wind box 33.

On the other hand, the exhaust gas j heat-exchanged in the fluidizing air heat exchanger 75 is sucked by an induced draft fan 77, transported through the piping, and introduced into the exhaust gas chamber 29 from the exhaust gas introduction pipe 30 provided in the side surface of the lower part of the exhaust gas chamber 29. Simultaneously, hot air e of 600°C from the hot air generator 85 is introduced into the exhaust gas chamber 29 from the white smoke preventing hot air inlet pipe 31. Within the exhaust gas chamber 29, the exhaust gas j and the hot air e (600°C) are thoroughly mixed, and moved upward to the exhaust tube 32. Hot air k (200°C) heat-exchanged in the swirling air heat exchanger 73 is introduced, as a swirl flow, into the exhaust tube 32, and is thoroughly mixed with the exhaust gas j and the hot air e. In this manner, steam in the exhaust gas j is vaporized by hot air e and hot air k, so that the occurrence of a white smoke is prevented. The treated exhaust gas free from dioxins etc. is discharged to the outside of the system from the top of the exhaust tube 32.

On the other hand, the combustion fly ash i entrained in the exhaust gas j introduced into the swirling air heat exchanger 73 and the fluidizing air heat exchanger 75 may deposit on the heat exchangers 73 and 75. Such deposited soot and dust (combustion fly ash) are stored in the soot and dust bunker 79, which is provided in the lower part of the fluidizing air heat exchanger 75, by intermittently introducing air from the air diffusion pipes 78 provided in the upper parts of the heat exchangers 73 and 75. Then, the soot and dust are passed through a double damper 80, transported to a humidifier 82 by a fly ash carrier 81 for prevention of scattering, temporarily stored in an ash bunker 83, and then carried out of the system.

Waste water q produced in the gas cooling chamber (wet wall type) 27 and the wet ultrasonic dust collector 72 is treated by a coagulation-sedimentation waste water treatment device (not shown).

### INDUSTRIAL APPLICABILITY

As described above, the incineration system using the two-stage swirling fluidized bed incinerator according to the present invention as a main apparatus generates a swirl flow (whirlwind flow) within the incinerator. The property of the two-stage swirling fluidized bed incinerator, namely, the property of attracting substances present outside the swirl flow to the central axis of the swirl flow, is fully utilized, whereby the outside temperature of the swirl flow can be held at 850°C or higher to continue stable combustion, and the energy of the swirl flow, namely, the central axis temperature of the swirl flow, can be maintained at 1,300°C or higher. Moreover, the dwell time of the combustion gas within the furnace can be prolonged markedly, making nearly complete combustion of 99.9999% possible. Thus, the unburned carbon is nearly absent in the combustion exhaust gas, and the efficiency of the neutralization reaction of an acidic gas (hydrogen chloride) produced by combustion is satisfactory, with the result that the resynthesis of dioxins can be inhibited. Since the headpiece-equipped wet wall type gas cooling chamber is located in the upper part of the two-stage swirling fluidized bed incinerator, moreover, 50% or more of the suspended substances (fly ash, etc.) in the combustion exhaust gas are absorbed into cooling water, and can be treated in the coagulation-sedimentation waste water treatment apparatus. Thus, the moisture content of the combustion exhaust gas can be kept to a minimum. Besides, solids are decreased from the combustion exhaust gas in the wet wall type gas cooling chamber, and the wet ultrasonic dust collector with a high dust collection efficiency is further used, so that the solids (fly ash) in the combustion exhaust gas can be decreased dramatically, and the air heat exchanger can be disposed on the high temperature side of the combustion exhaust gas. In this manner, thermal energy produced by the incinerator can be recycled to generate a fluidized bed and a swirl flow. Furthermore, a swirl flow of hot air is produced in the exhaust gas chamber and the exhaust tube, whereby steam of the combustion exhaust gas released into the atmosphere can be vaporized to prevent cloudiness. As a result, the construction and repair costs and the running cost can be reduced remarkably. The predominant conventional incineration system is a method in which dioxins in incineration ash depositing in the lower part of the furnace and those in combustion fly ash are adsorbed into activated carbon, and wastes are directly burned and melted, together with the activated carbon, by a melting furnace and a gasifying melting furnace. Even with the gasifying melting furnace for direct burning and melting, dioxins are always incorporated in the combustion exhaust gas. Thus, the combustion fly ash and those adsorbed to activated carbon have to be treated endlessly. This requires immense construction costs and running cost.

## Claims

1. A two-stage swirling fluidized bed incinerator system, comprising:
a first-stage swirling fluidized bed chamber;
a second-stage gas swirl chamber in fluid communication with an upper part of the first-stage swirling fluidized bed chamber;
a gas combustion chamber in fluid communication with an upper part of the second-stage gas swirl chamber;
a wet wall type gas cooling chamber provided in an upper part of the gas combustion chamber;
a wet ultrasonic dust collector in fluid communication with a side surface of an upper part of the wet wall type gas cooling chamber;
a swirling air heat exchanger and a fluidizing air heat exchanger in fluid communication with the wet ultrasonic dust collector; and
an exhaust gas chamber having an exhaust tube for discharging a combustion exhaust gas to an outside of the system, the combustion exhaust gas having been dedusted in the wet ultrasonic dust collector and heat-exchanged in the swirling air heat exchanger and the fluidizing air heat exchanger, and
adapted to utilize thermal energy, which is obtained by heat exchange in the swirling air heat exchanger and the fluidizing air heat exchanger, for generation of swirl flows in the first-stage swirling fluidized bed chamber, the second-stage gas swirl chamber, and the exhaust tube,
wherein the first-stage swirling fluidized bed chamber is provided with a conical bottom plate furnished with many orifice nozzles and a heating medium withdrawal port, a wind box provided below the conical bottom plate, and a hot air feed pipe for feeding pressurized air into the wind box, and the heating medium is filled beforehand above the conical bottom plate so that pressurized air blown in from the hot air feed pipe is blown out upwardly of the conical bottom plate through the many orifice nozzles to blow the heating medium upward, thereby forming a fluidized bed, an inner wall of an upper part of the first-stage swirling fluidized bed chamber is provided with many orifice nozzles arranged tangentially, an outer wall of the upper part of the first-stage swirling fluidized bed chamber is provided with an annular wind box in fluid communication with the many orifice nozzles arranged tangentially, and the wind box is mounted with a hot air feed pipe for feeding pressurized air so that pressurized air fed into the wind box is fed into the first-stage swirling fluidized bed chamber through the many orifice nozzles arranged tangentially, whereby the heating medium forming the fluidized bed is swirled;
a charging port for a material to be incinerated, a neutralizer charging port, a heating medium circulation port, and a burner are provided between the first-stage swirling fluidized bed chamber and the second-stage gas swirl chamber so that the material to be incinerated, the neutralizer, and the heating medium are charged into the fluidized bed, and allowed to ascend to the second-stage gas swirl chamber while being swirled, an inner wall of an upper part of the second-stage gas swirl chamber is provided with many orifice nozzles, an outer wall of the upper part of the second-stage gas swirl chamber is provided with an annular wind box in fluid communication with the orifice nozzles, and the wind box is mounted with a hot air feed pipe for feeding pressurized air so that pressurized air fed into the wind box is blown into the second-stage gas swirl chamber through the orifice nozzles, whereby a combustion exhaust gas ascending from the first-stage swirling fluidized bed chamber is further swirled;
an upper part of the gas combustion chamber is provided with an exhaust gas outlet pipe in fluid communication with the wet wall type gas cooling chamber so that a combustion gas and a combustion fly ash are introduced into the wet wall type gas cooling chamber;
the wet wall type gas cooling chamber is provided with a headpiece so as to cover the exhaust gas outlet pipe of the gas combustion chamber, a cooling water inlet pipe is provided in a central part of an upper surface of the headpiece, and a high pressure air inlet pipe for feeding high pressure air is provided below the headpiece and in an outer peripheral part of the exhaust gas outlet pipe in such a manner as to penetrate an outer wall of the wet wall type gas cooling chamber so that cooling water is continuously and averagely fed along the upper surface of the headpiece, and is brought into contact with the combustion exhaust gas and fly ash, which are ascending from the gas combustion chamber, at a lower end of the headpiece, and that cooling water containing the combustion exhaust gas and fly ash is stored in a space between the outer peripheral part of the exhaust gas outlet pipe and the outer wall of the wet wall type gas cooling chamber;
the exhaust gas chamber is provided with a combustion exhaust gas inlet pipe for introducing the combustion exhaust gas after collection of the fly ash, a white smoke preventing hot air inlet pipe, and the exhaust tube, an annular wind box is provided at a lowermost stage of the exhaust tube, many orifice nozzles arranged tangentially are provided in a side plate of the exhaust tube, and a hot air feed pipe for feeding pressurized air is provided outside the exhaust tube so that pressurized air is passed through the hot air feed pipe, and blown into the exhaust tube from the orifice nozzles via the wind box to generate the swirl flow.

2. The two-stage swirling fluidized bed incinerator system according to claim 1, wherein
the wet ultrasonic dust collector comprises an exhaust gas inlet pipe of a square cross-sectional shape and in a conical form, a gas straightening plate unit, a vibrator unit composed of many piezoelectric elements, a mist separator, and an exhaust gas outlet pipe of a square cross-sectional shape and in a conical form,
the swirling air heat exchanger comprises an exhaust gas inlet pipe of a square cross-sectional shape and in a conical form, an air diffusion pipe for removing deposited soot and dust by high pressure air, an expansion of a square cross-sectional shape, and piping for feeding hot air to the first-stage swirling fluidized bed chamber, the second-stage gas swirl chamber, and the exhaust gas chamber of the two-stage swirling fluidized bed incinerator, and
the fluidizing air heat exchanger is provided downstream of the swirling air heat exchanger, and comprises a duct in fluid communication with the swirling air heat exchanger, an air diffusion pipe for removing deposited soot and dust by high pressure air, an expansion of a square cross-sectional shape, piping for feeding hot air to generate the fluidized bed at a bottom of the two-stage swirling fluidized bed incinerator, piping for feeding an exhaust gas to the exhaust gas chamber of the two-stage swirling fluidized bed incinerator, a soot and dust storage chamber, and a soot and dust outlet pipe.

3. An incineration method for incinerating a material to be incinerated, with use of the two-stage swirling fluidized bed incinerator system according to claim 1 or 2, thereby neutralizing a combustion acidic gas and suppressing resynthesis of dioxins, comprising:
charging the material to be incinerated, into a heating medium, which is swirlingly ascending from the first-stage swirling fluidized bed chamber, through the charging port for the material to be incinerated, keeping an outside temperature of a swirl flow within the gas combustion chamber at 850°C or higher, and maintaining a central axis temperature of the swirl flow at 1,300°C or higher, thereby completely burning the material to be incinerated;
charging a neutralizer through the neutralizer charging port to neutralize an acidic gas which is a combustion product of the material to be incinerated;
introducing a combustion gas and a fly ash, which are generated by combustion of the material to be incinerated, into the wet wall type gas cooling chamber through the exhaust gas outlet pipe of the gas combustion chamber;
feeding cooling water continuously and averagely through the cooling water inlet pipe along the upper surface of the headpiece to bring the combustion exhaust gas, fly ash and cooling water into contact with each other and store cooling waste water containing the combustion exhaust gas and fly ash in the space between the outer peripheral part of the exhaust gas outlet pipe and the outer wall of the wet wall type gas cooling chamber, feeding high pressure air through the high pressure air inlet pipe to mix the combustion exhaust gas and the fly ash, then discharging the waste water, and discharging a remaining combustion gas;
dedusting and heat-exchanging the combustion gas discharged from the wet wall type gas cooling chamber, then returning the combustion gas to the exhaust gas chamber, and allowing the combustion gas to ascend to the exhaust tube to generate the swirl flow, thereby vaporizing moisture in the combustion gas; and
utilizing thermal energy recovered by heat exchange of the combustion gas for generating the swirl flows in the first-stage swirling fluidized bed chamber, the second-stage gas swirl chamber, and the exhaust tube, and for forming the fluidized bed below the first-stage swirling fluidized bed chamber.

4. The incineration method according to claim 3 for incinerating a material to be incinerated, with use of the two-stage swirling fluidized bed incinerator system according to claim 2, further comprising:
uniformizing a flow containing the combustion exhaust gas and the combustion fly ash, which has been discharged through the exhaust gas outlet pipe provided in an upper side surface of the wet wall type gas cooling chamber, by the gas straightening plate unit of the wet ultrasonic dust collector;
absorbing the combustion fly ash into fine water droplets formed by giving vibrations in a sound wave region at about 28 KHz/S which have been generated by the vibrator unit composed of the many piezoelectric elements, thereby separating the combustion fly ash from the combustion exhaust gas;
removing remaining water droplets in the combustion exhaust gas by the mist separator; and
then sending the dedusted combustion exhaust gas to the swirling air heat exchanger and the fluidizing air heat exchanger for heat exchange, followed by introducing the heat-exchanged exhaust gas into the exhaust gas chamber.
